(19) Europäisches Patentamt / European Patent Office / Office européen des brevets

(11) **EP 2 710 336 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(51) Int Cl.:
***G01F 1/66*** *(2006.01)*

(21) Anmeldenummer: **12716468.9**

(22) Anmeldetag: **27.04.2012**

(86) Internationale Anmeldenummer:
**PCT/EP2012/057796**

(87) Internationale Veröffentlichungsnummer:
**WO 2012/156196 (22.11.2012 Gazette 2012/47)**

(54) **ULTRASCHALL-DURCHFLUSSMESSGERÄT**

ULTRASONIC FLOWMETER

DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2011 DE 102011076000**

(43) Veröffentlichungstag der Anmeldung:
**26.03.2014 Patentblatt 2014/13**

(73) Patentinhaber: **Endress+Hauser Flowtec AG**
**4153 Reinach (CH)**

(72) Erfinder:
• **WIEST, Achim**
  **79576 Weil am Rhein (DE)**
• **BERGER, Andreas**
  **79686 Hasel-Glashütten (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 0 715 155       EP-A2- 1 255 094**
**DE-C1- 19 808 642      DE-U1- 29 719 677**
**US-A- 6 098 466**

**Beschreibung**

Die vorliegende Erfindung betrifft ein Ultraschall-Durchflussmessgerät zur Durchflussmessung, welches ein Messrohr mit einer geraden Messrohrachse, einen Sender zum Senden eines akustischen Signals auf einen ersten Signalpfad, einen Empfänger zum Empfangen des akustischen Signals auf dem ersten Signalpfad und eine erste Reflexionsfläche umfasst, an welcher das akustische Signal auf dem ersten Signalpfad reflektiert wird, wobei das auf die erste Reflexionsfläche einfallende akustische Signal entlang einer ersten Geraden verläuft, welche einen ersten Abstand zur Messrohrachse aufweist.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z. B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialien.

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert. Die US 4,103,551 und die US 4,610,167 zeigen Ultraschall-Durchflussmessgeräte mit Reflexionen an dafür im Messrohr vorgesehenen Reflexionsflächen. Nun sind auch Mehrpfad-Systeme bekannt geworden, welche mehrere Ultraschallwandlerpaare aufweist, welche jeweils einen Signalpfad bilden, entlang welchem die akustischen Signale durch das Messrohr verlaufen. Die jeweiligen Signalpfade und die zugehörigen Ultraschallwandler liegen dabei in zueinander parallelen und zur Messrohrachse parallelen Ebenen. Die US 4,024,760 oder die US 7,706,986 zeigen beispielhaft solch Mehrpfad-Systeme. Ein Vorteil von Mehrpfad-Systemen ist, dass sie das Profil der Strömung des Messmediums im Messrohr an mehreren Stellen vermessen und dadurch hochgenaue Messwerte für den Durchfluss bereitstellen können. Erreicht wird dies unter anderem auch dadurch, dass die einzelnen Laufzeiten entlang der unterschiedlichen Signalpfade verschieden gewichtet werden. Nachteilig bei Mehrpfad-Systemen sind jedoch ihre Herstellungskosten, da mehrere Ultraschallwandler und gegebenenfalls eine aufwendige Auswerteelektronik verbaut sind.

Zur Gewichtung der Signalpfade gibt es verschiedene Arbeiten. Der Aufsatz "Comparsion of integration methods for multipath accoustic discharge measurements" von T. Tresch, T. Staubli und P. Gruber in der Begleitschrift zur 6th international Conference on Innovation in Hydraulic Efficiency Measurements, 30 Juli - 1. August 2006 in Portland, Oregon, USA, vergleicht gängige Methoden zur Gewichtung der Laufzeiten entlang unterschiedlicher Signalpfade zur Berechnung des Durchflusses.

Die WO1995012110A1 zeigt ein Ultraschall-Durchflussmessgerät mit einem Messrohr mit ebenen Wandungen und einer geraden Messrohrachse und zumindest einer Reflexionsfläche im Messrohr mit einer Flächennormalen auf dieser Reflexionsfläche, welche drei von Null verschiedene Komponenten in einem rechtwinkligen Koordinatensystem aufweist, dessen eine Achse der Messrohrachse entspricht. Das Dokument lehrt, dass ein Ultraschallsignal mit einer vorgegebenen Breite, welche deutlich größer ist als ein punktförmiges Signal, eine über diese Breite gaußförmig verteilte Sensitivität aufweist, zur Durchflussmessung verwendet wird. Die Breite des Signals entspricht dabei näherungsweise der Breite des Vierkantmessrohrs. Würde ein solches Signal nun parallel zu den Seitenwänden durch das Messrohr verlaufen, würde der Bereich mit der höchsten Sensitivität durch den mittleren Bereich des Messrohrs verlaufen, und folglich auch die höheren Strömungsgeschwindigkeiten mit höheren Wertigkeiten registrieren, was bei sehr kleinen Strömungsgeschwindigkeiten zu einem Messfehler führt. Das Dokument lehrt daher weiter, das Messrohr weitgehend homogen zu durchschallen, indem die Ultraschallsignale durch alle Bereiche des Messrohrs mittels orientierter Reflexionen geführt werden. Zur Veranschaulichung wurde das breite Ultraschallsignal durch einzelne Teilstrahlen dargestellt. Die Weglängen der einzelnen Teilstrahlen sind gleich lang, so dass sich die Teilstrahlen nicht durch Interferenz auslöschen.

Ultraschall-Durchflussmessgeräte mit einem Signalpfad, welche sich durch Reflexion in mehrere Teilabschnitte unterteilt sind u.a. aus der DE297 19 677 U1 und aus der US 6,098,466 A bekannt.

Die EP 0 715 155 A1 offenbart ein Ultraschall-Durchflussmessgerät mit welchem es gelingt eine Strömungsrotation messtechnisch zu erfassen und zu kompensieren.

Die DE 198 08 642 C1 stellt eine Möglichkeit der Gewichtung von Ultraschallsignalpfaden in einem fünfeckigen Messrohr dar. Dies ermöglicht die Kompensation eines Strömungsprofils und damit auch die Messung Strömungen mit geringen Reynoldszahlen.

Die Aufgabe der Erfindung besteht darin, ein Ultraschall-Durchflussmessgerät vorzuschlagen, welches den Durchfluss hochgenau ermittelt und dabei kostengünstig herzustellen ist.

Die Aufgabe wird gelöst durch die Gegenstände der unabhängigen Ansprüche 1 und 10. Weiterbildungen und Ausgestaltungen der Erfindung finden sich in den Merkmalen der jeweils abhängigen Ansprüche wieder. Sämtliche Ausgestaltungen sind, falls nichts Gegenteiliges erwähnt, technisch sinnvoll miteinander kombinierbar.

Ein erfindungsgemäßes Ultraschall-Durchflussmessgerät zur Durchflussmessung, umfasst ein Messrohr mit einer geraden Messrohrachse, wobei das Messrohr einen kreisförmigen Querschnitt aufweist, zumindest einen ersten Sender zum Senden eines akustischen Signals auf einen ersten Signalpfad, zumindest einen ersten Empfänger zum Empfangen des akustischen Signals auf dem ersten Signalpfad und zumindest eine erste Reflexionsfläche, wobei der Sender, der Empfänger und die erste Reflexionsfläche so zueinander ausgerichtet und im oder am Messrohr angeordnet sind, dass das akustische Signal auf dem ersten Signalpfad vom ersten Sender zum ersten Empfänger so an der zumindest einen ersten Reflexionsfläche reflektiert wird, dass das akustische Signal auf dem ersten Signalpfad entlang zumindest eines ersten und zumindest eines weiteren, zweiten geraden Teilabschnitts durch das Messrohr verläuft, wobei der erste gerade Teilabschnitt einen ersten Abstand zur Messrohrachse aufweist und der zweite gerade Teilabschnitt einen zweiten Abstand zur Messrohrachse aufweist, wobei der erste Abstand ungleich dem zweiten Abstand ist, und wobei die Summe aller auf die Messrohrachse projizierten Längen von Projektionen aller Teilabschnitte des ersten Signalpfads mit dem ersten Abstand zur Messrohrachse auf einen die Messrohrachse umfassenden Längsschnitt einen vorgegebenen ersten Wert aufweist und wobei die Summe aller auf die Messrohrachse projizierten Längen von Projektionen aller Teilabschnitte des ersten Signalpfads mit dem zweiten Abstand zur Messrohrachse auf einen die Messrohrachse umfassenden Längsschnitt einen vorgegebenen zweiten Wert aufweist, wobei der erste Wert ungleich dem zweiten Wert ist, und wobei der erste und der zweite Wert ungleich Null sind. Insbesondere verläuft das auf die erste Reflexionsfläche einfallende akustische Signal entlang des ersten geraden Teilabschnitts und das an der ersten Reflexionsfläche reflektierte akustische Signal verläuft entlang des zweiten geraden Teilabschnitts. Die erste Reflexionsfläche ist entsprechend im Messrohr angeordnet. Eine Flächennormale auf die erste Reflexionsfläche schneidet dabei die Messrohrachse nicht senkrecht. Werden die Flächennormale auf die erste Reflexionsfläche und die Messrohrachse als Vektoren beschrieben, ist ihr Skalarprodukt ungleich Null. Schneiden sich zwei Geraden im Raum ist der kleinste Winkel ist der Schnittwinkel, welcher hier eben ungleich 90° ist.

Sowohl als Sender, als auch als Empfänger dienen üblicherweise Ultraschallwandler, insbesondere elektromechanische Wandler, z.B. piezoelektrische Elemente, welche geeignet sind, das akustische Signal, insbesondere einen Ultraschallimpuls oder eine oder mehrere Ultraschallwellen, zu Senden, als auch zu Empfangen. Werden Ultraschallwandler als Sender und Empfänger eingesetzt, kann das akustische Signal entlang dem ersten Signalpfad hin und wieder zurück, also in zwei Richtungen, verlaufen. Sender und Empfänger sind somit vertauschbar.

In einer Ausgestaltung der Erfindung ist der Sender geeignet zum Empfangen eines akustischen Signals auf dem ersten Signalpfad und der Empfänger ist geeignet zum Senden des akustischen Signals auf den ersten Signalpfad. Es handelt sich bei Sender und Empfänger um Ultraschallwandler, insbesondere um Ultraschallwandler mit elektromechanischen Wandlerelementen, z.B. piezoelektrischen Wandlerelementen.

Als Signalpfad, auch akustischer Pfad genannt, wird der Weg des akustischen Signals, also z.B. der Ultraschallwelle oder des Ultraschallimpulses, zwischen dem Sender, welcher das akustische Signal aussendet, und dem Empfänger, welcher das akustische Signal empfängt, bezeichnet. In einer Ausgestaltung der Erfindung wird das akustische Signal, wie bei einem Inline-System üblich, senkrecht zur Membran abgestrahlt. Der Empfänger ist dann so im oder am Messrohr platziert, dass das Signal wiederum senkrecht auf seine Membran trifft.

Als ein akustisches Signal wird insbesondere eine Schallwelle oder ein Paket von Schallwellen verwendet. Als Reflexionsfläche dient eine Grenzfläche, z. B. zwischen gebildet zwischen Messmedium und Messrohr oder einem am oder im Messrohr angeordneten Reflektor. Nach einer Ausgestaltung der Erfindung ist die Reflexionsfläche eine Oberfläche von einem separat im Messrohr angeordneten Reflektor, welche das Messmedium im Betrieb des Ultraschall-Durchflussmessgeräts berührt.

Gemäß einer Ausgestaltung der Erfindung wird das akustische Signal senkrecht zu einer Membran eines ersten Ultraschallwandlers als Sender ausgesendet und senkrecht auf einer Membran eines zweiten Ultraschallwandlers als Empfänger empfangen, wobei beide Ultraschallwandler so zur Reflexionsfläche ausgerichtet sind, dass das akustische Signal an der Reflexionsfläche zum zweiten Ultraschallwandler reflektiert wird.

Die Ausrichtung der Reflexionsfläche erfolgt z. B. über die Winkelhalbierende zwischen einfallendem akustischem Signal entlang der ersten Geraden auf dem ersten Signalpfad und reflektiertem akustischen Signal entlang der zweiten Geraden auf dem ersten Signalpfad. Die Winkelhalbierende ist die Normale auf die Reflexionsfläche. In einer Ausgestaltung der Erfindung schneidet die Normale auf die Reflexionsfläche die Messrohrachse nicht senkrecht.

Der Abstand zweier Geraden wird hier, wie in der Mathematik üblich, definiert. Verlaufen zwei Geraden windschief zueinander im Raum, wird der Abstand der einen Geraden zu einer zu ihr parallelen Hilfsebene berechnet, in welcher die andere Gerade liegt.

Zwei Geraden, die nicht deckungsgleich sind, weisen stets einen Abstand zueinander auf. Dieser bemisst sich in der Länge des Gemeinlots zwischen den beiden Geraden, welches auf beiden Geraden senkrecht steht. Selbst für zueinander windschiefe Geraden existiert ein Gemeinlot. Daher lässt sich auch eine Ebene konstruieren, in welcher eine Gerade liegt, und welche zur anderen Gerade parallel ist. Es lässt sich somit eine erste Ebene konstruieren, in welcher die erste Gerade liegt und welche parallel zur Messrohrachse ist. Analog existiert eine zweite Ebene parallel zur Messrohrachse in welcher die zweite Gerade liegt. Erfindungsgemäß wird das akustische Signal auf dem ersten Signalpfad an der ersten Reflexionsfläche reflektiert, wobei das auf die erste Reflexionsfläche einfallende akustische Signal entlang des ersten geraden Teilabschnitts in einer ersten Ebene parallel zur Messrohrachse verläuft, welche erste Ebene den ersten Abstand zur Messrohrachse aufweist, und wobei das an der ersten Reflexionsfläche reflektierte akustische Signal entlang des zweiten geraden Teilabschnitts in einer zweiten Ebene parallel zur Messrohrachse verläuft, welche zweite Ebene den zweiten Abstand zur Messrohrachse aufweist. Die erste Ebene würde einen ersten geraden Kreiszylinder mit dem ersten Abstand als Radius seiner Grundfläche entlang einer zur Messrohrachse parallelen Geraden, welche Teil seiner Mantelfläche ist, tangieren, genau wie die zweite Ebene einen zweiten geraden Kreiszylinder mit dem zweiten Abstand als Radius seiner Grundfläche tangieren würde. Beide Ebenen schneiden sich in einer Schnittgeraden, welche Schnittgerade ebenfalls parallel zur Messrohrachse verläuft. Die Schnittgerade liegt dabei insbesondere im Bereich der ersten Reflexionsfläche. Im zugrunde liegenden Modell breiten sich die akustischen Signale entlang geraden Teilabschnitten aus. Daher wird die Schnittgerade vom ersten geraden Teilabschnitt und vom zweiten geraden Teilabschnitt im Punkt der Reflexion des akustischen Signals auf dem ersten Signalpfad an der Reflexionsfläche geschnitten. Natürlich ist dies ein Model. In der Praxis ist der erste Signalpfad nicht nur ein Punkt breit und damit ist der Punkt der Reflexion eher eine Fläche im Bereich der Reflexionsfläche.

Gemäss der Erfindung handelt es sich bei dem Messrohr um ein Messrohr mit elliptischem, insbesondere kreisrundem Querschnitt, wobei die Messrohrachse dann auch als Haupt-, Mittel- oder Längsachse bezeichnet werden kann. Die Hauptströmungsrichtung des Mediums im Messrohr führt entlang der Messrohrachse.

In einer weiteren Ausgestaltung der Erfindung ist sowohl der erste Abstand als auch der zweite Abstand ungleich Null. Gemäß einer weiteren Ausgestaltung betragen die Abmessungen des Messrohrs ein Vielfaches der Abmessungen der Ultraschallwandler bzw. der Sender und/oder Empfänger. So ist bei einem runden Messrohr und scheibenförmigen Sendern und/oder Empfänger der Durchmesser des Messrohrs zumindest doppelt, insbesondere fünffach, insbesondere mindestens zehnfach so groß, wie der Durchmesser der Scheibe der Sender und/oder Empfänger.

Nach einer Ausgestaltung des erfindungsgemäßen Ultraschall-Durchflussmessgeräts wird zur Durchflussmessung ein Laufzeitdifferenzverfahren verwendet. Das erfindungsgemäße Ultraschall-Durchflussmessgerät ist entsprechend dazu geeignet ausgestaltet.

Gemäß einer weiteren Weiterbildung der Erfindung ist der erste Abstand kleiner als der zweite Abstand und die Summe aller Werte der auf die Messrohrachse projizierten Längen aller Teilabschnitte des ersten Signalpfads mit dem ersten Abstand zur Messrohrachse ist größer als die Summe aller Werte der auf die Messrohrachse projizierten Längen aller Teilabschnitte des ersten Signalpfads mit dem zweiten Abstand zur Messrohrachse. Das Signal auf erstem Signalpfad weist eine Richtungskomponente in oder entgegen der Richtung der Messrohrachse auf.

Gemäß einer weiteren Weiterbildung der Erfindung sind die Summen aller Werte der auf die Messrohrachse projizierten Längen aller Teilabschnitte des ersten Signalpfads, welche denselben Abstand zur Messrohrachse aufweisen, mit einer gemeinsamen, vorgegebenen, insbesondere stetigen, Berechnungsvorschrift in Abhängigkeit von diesem jeweiligen Abstand berechnet. Beispielsweise sind die Summen aller Werte der auf die Messrohrachse projizierten Längen aller Teilabschnitte des ersten Signalpfads, welche denselben Abstand zur Messrohrachse aufweisen, proportional zu Gewichtungsfaktoren zur Gewichtung der Laufzeit des akustischen Signals entlang eines Messpfads mit demselben Abstand zur Messrohrachse eines analogen Mehrpfad-Ultraschall-Durchflussmessgeräts mit mehreren Messpfaden mit denselben Abständen, wie die unterschiedlichen Teilabschnitte des ersten Signalpfads zur Messrohrachse. Weisen die Messpfade des Mehrpfad-Ultraschall-Durchflussmessgeräts dieselben Winkel zur Messrohrachse auf, werden die Gewichtungsfaktoren beispielsweise nach der Gauss-Jacobi oder der OWICS-Methode, wie sie in der Dissertation von A. Voser: "Analyse und Fehleroptimierung der mehrpfadigen akustischen Durchflussmessung in Wasserkraftanlagen", ETH Zürich Dissertation Nr. 13102, 1999], beschrieben sind, in Abhängigkeit vom jeweiligen Abstand zur Messrohrachse berechnet. Analog weisen die Teilabschnitte vorgegebene Längen auf, die so bemessen sind, dass die Summen aller Werte der auf die Messrohrachse projizierten Längen aller Teilabschnitte des ersten Signalpfads, welche denselben Abstand zur Messrohrachse aufweisen, proportional zu den Gewichtungsfaktoren eines analogen Mehrpfad-Ultraschall-Durchflussmessgeräts sind.

Gemäß einer weiteren Weiterbildung der Erfindung verlaufen der erste Teilabschnitt und der zweite Teilabschnitt zueinander windschief im Messrohr verlaufen.

Gemäß einer weiteren Weiterbildung der Erfindung umfasst das Ultraschall-Durchflussmessgerät zumindest eine weitere, zweite Reflexionsfläche, wobei der Sender, der Empfänger und die erste Reflexionsfläche und die zumindest eine weitere, zweite Reflexionsfläche so zueinander ausgerichtet und im oder am Messrohr angeordnet sind, dass das akustische Signal auf dem ersten Signalpfad vom ersten Sender an der ersten und an der zumindest einen weiteren, zweiten Reflexionsfläche so zum ersten Empfänger reflektiert wird, dass das akustische Signal auf dem ersten Signalpfad entlang zumindest eines weiteren, dritten geraden Teilabschnitts durch das Messrohr verläuft, wobei der dritte gerade Teilabschnitt einen dritten Abstand zur Messrohrachse aufweist, wobei der dritte Abstand ungleich dem ersten und dem zweiten Abstand ist, und wobei die Summe aller auf die Messrohrachse projizierten Längen aller Teilabschnitte des ersten Signalpfads mit dem dritten Abstand zur Messrohrachse einen vorgegebenen dritten Wert aufweist, welcher ungleich dem ersten Wert und ungleich dem zweiten Wert ist, und wobei der dritte Wert ungleich Null ist.

Gemäß einer weiteren Weiterbildung der Erfindung umfasst das Ultraschall-Durchflussmessgerät zumindest einen weiteren, zweiten Sender zum Senden eines akustischen Signals auf einen zweiten Signalpfad, und zumindest einen weiteren, zweiten Empfänger zum Empfangen eines akustischen Signals auf dem zweiten Signalpfad und zumindest eine weitere, dritte Reflexionsfläche, wobei der zweite Sender, der zweite Empfänger und die zumindest eine weitere, dritte Reflexionsfläche so zueinander ausgerichtet und im oder am Messrohr angeordnet sind, dass das akustische Signal auf dem zweiten Signalpfad vom zweiten Sender so an der zumindest einen weiteren, dritten Reflexionsfläche zum zweiten Empfänger reflektiert wird, dass das akustische Signal auf dem zweiten Signalpfad entlang zumindest eines vierten und zumindest eines fünften geraden Teilabschnitts durch das Messrohr verläuft, wobei der vierte gerade Teilabschnitt einen vierten Abstand zur Messrohrachse aufweist und der fünfte gerade Teilabschnitt einen fünften Abstand zur Messrohrachse aufweist, wobei der vierte Abstand ungleich dem fünften Abstand ist, und wobei die Summe aller auf die Messrohrachse projizierten Längen aller Teilabschnitte des zweiten Signalpfad mit dem vierten Abstand zur Messrohrachse einen vorgegebenen vierten Wert aufweist und wobei die Summe aller auf die Messrohrachse projizierten Längen aller Teilabschnitte des zweiten Signalpfad mit dem fünften Abstand zur Messrohrachse einen vorgegebenen fünften Wert aufweist, wobei der vierte Wert ungleich dem fünften Wert ist, und wobei der vierte und der fünfte Wert ungleich Null sind.

Gemäß einer weiteren Weiterbildung der Erfindung umfasst das Ultraschall-Durchflussmessgerät zumindest eine weitere, vierte Reflexionsfläche, wobei der zweite Sender, der zweite Empfänger und die dritte Reflexionsfläche und die zumindest eine weitere, vierte Reflexionsfläche so zueinander ausgerichtet und im oder am Messrohr angeordnet sind, dass das akustische Signal auf dem zweiten Signalpfad vom zweiten Sender an der dritten und an der zumindest einen weiteren, vierten Reflexionsfläche so zum zweiten Empfänger reflektiert wird, dass das akustische Signal auf dem zweiten Signalpfad entlang zumindest eines weiteren, sechsten geraden Teilabschnitts durch das Messrohr verläuft, wobei der sechste gerade Teilabschnitt einen sechsten Abstand zur Messrohrachse aufweist, wobei der sechste Abstand ungleich dem vierten und dem fünften Abstand ist, und wobei die Summe aller auf die Messrohrachse projizierten Längen aller Teilabschnitte des zweiten Signalpfads mit dem sechsten Abstand zur Messrohrachse einen vorgegebenen sechsten Wert aufweist, welcher ungleich dem vierten Wert und ungleich dem fünften Wert ist, und wobei der sechste Wert ungleich Null ist.

Gemäß einer weiteren Weiterbildung der Erfindung verlaufen der erste Signalpfad und der zweite Signalpfad spiegelbildlich zueinander im Messrohr.

In einem weitergebildeten Ultraschall-Durchflussmessgerät sind der erste Sender, der erste Empfänger und die erste Reflexionsfläche so zueinander ausgerichtet und im oder am Messrohr angeordnet sind, dass das akustische Signal auf dem ersten Signalpfad vom ersten Sender zum ersten Empfänger helical um die Messrohrachse verläuft. Auch der zweite Sender und Empfänger und die zweite Reflexionsfläche können so zueinander ausgerichtet und im oder am Messrohr angeordnet sein, dass der sich zweite Signalpfad, analog zum ersten Signalpfad, helixförmig um die Messrohrachse windet.

Bei dem erfindungsgemäßen Verfahren zur Messung des Durchfluss eines Mediums durch ein Messrohr mit einer im Wesentlichen geraden Messrohrachse nach dem Laufzeitdifferenzverfahren wird zumindest ein akustisches Signal von zumindest einem ersten Sender auf einen ersten Signalpfad zu zumindest einem ersten Empfänger ausgesendet, wobei das akustische Signal auf dem ersten Signalpfad vom Sender zum Empfänger so an zumindest einer ersten Reflexionsfläche zu einem ersten Empfänger durch das Messrohr reflektiert wird, dass sich das akustische Signal auf dem ersten Signalpfad entlang zumindest eines ersten und zumindest eines zweiten geraden Teilabschnitts durch das Messrohr ausbreitet, wobei der erste gerade Teilabschnitt einen ersten Abstand zur Messrohrachse aufweist und wobei der zweite gerade Teilabschnitt einen zweiten Abstand zur Messrohrachse aufweist, wobei der erste Abstand ungleich dem zweiten Abstand ist, und wobei die Summe aller auf die Messrohrachse projizierten Längen aller Teilabschnitte des ersten Signalpfads mit dem ersten Abstand zur Messrohrachse einen vorgegebenen ersten Wert aufweist und wobei die Summe aller auf die Messrohrachse projizierten Längen aller Teilabschnitte des ersten Signalpfads mit dem zweiten Abstand zur Messrohrachse einen vorgegebenen zweiten Wert aufweist, wobei der erste Wert ungleich des zweiten Werts ist, und wobei der erste und der zweite Wert ungleich Null sind.

Dabei können sich jeweils zwei Teilabschnitte des ersten Signalpfads, insbesondere mit demselben Abstand zur Messrohrachse und damit derselben auf die Messrohrachse projizierten Länge, spiegelbildlich im Messrohr gegenüberliegen. Vorteil dieser Ausgestaltung ist es, dass kein zweiter Signalpfad notwendig ist, um eine ähnliche Messleistung zu erhalten.

Natürlich kann aber auch ein zweites akustisches Signal auf einem zweiten Signalpfad von einem zweiten Sender so an zumindest einer weiteren, dritten Reflexionsfläche zu einem zweiten Empfänger durch das Messrohr reflektiert werden, dass sich das akustische Signal auf dem zweiten Signalpfad entlang zumindest eines vierten und zumindest eines fünften geraden Teilabschnitts durch das Messrohr ausbreitet, wobei der vierte gerade Teilabschnitt einen vierten Abstand zur Messrohrachse aufweist und wobei der fünfte gerade Teilabschnitt einen fünften Abstand zur Messrohrachse aufweist, wobei der vierte Abstand ungleich dem fünften Abstand ist, und wobei die Summe aller auf die Messrohrachse projizierten Längen aller Teilabschnitte des zweiten Signalpfads mit dem vierten Abstand zur Messrohrachse einen vorgegebenen vierten Wert aufweist und wobei die Summe aller auf die Messrohrachse projizierten Längen aller Teilabschnitte des zweiten Signalpfads mit dem fünften Abstand zur Messrohrachse einen vorgegebenen fünften Wert aufweist, wobei der vierte Wert ungleich dem fünften Wert ist, und wobei der vierte und der fünfte Wert ungleich Null sind.

Dabei können sich der erste und der zweite Signalpfad spiegelbildlich im Messrohr gegenüberliegen, wobei dann beide bei der Berechnung des Durchflusses gleich gewichtet werden.

Alternativ verlaufen beide Signalpfade so im Messrohr, dass sich der erste und der zweite Signalpfad durch Drehung um die Messrohrachse ineinander überführen lassen. Sie sind zueinander um einen vorgegebenen Winkel um die Messrohrachse verdreht

Bei zunehmenden Durchflussgeschwindigkeiten kann es zu Verwehungen des Ultraschallsignals des Ultraschall-Durchflussmessgerätes kommen, was zu einer Verringerung der Signalstärke führt. Dieser Effekt kann durch einen oder mehrere konkave Spiegel vorteilhaft korrigiert werden.

Die Erfindung lässt zahlreiche Ausführungsformen zu. Einige davon sind nachfolgend anhand der Figuren näher erläutert werden. Gleiche Elemente sind in den Figuren mit gleichen Bezugszeichen versehen.

Fig. 1     zeigt ein Mehrpfad-Ultraschall-Durchflussmessgerät des Stands der Technik,

Fig. 2     zeigt ein erfindungsgemäßes Ultraschall-Durchflussmessgerät perspektivisch,

Fig. 3     zeigt ein erfindungsgemäßes Ultraschall-Durchflussmessgerät im Längsschnitt,

Fig. 4     zeigt ein erfindungsgemäßes Ultraschall-Durchflussmessgerät im Querschnitt,

Fig. 5     zeigt ein erfindungsgemäßes Ultraschall-Durchflussmessgerät in einer weiteren Ausgestaltung im Querschnitt,

Fig. 6     zeigt ein erfindungsgemäßes Ultraschall-Durchflussmessgerät in einer weiteren Ausgestaltung perspektivisch,

Fig. 7     zeigt ein erfindungsgemäßes Ultraschall-Durchflussmessgerät in einer weiteren Ausgestaltung sowohl im Längs-, als auch im Querschnitt und perspektivisch.

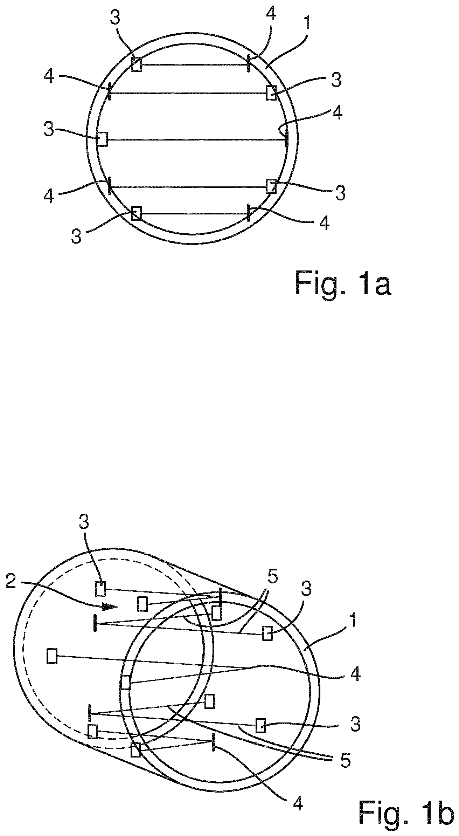

In Fig. 1a ist ein Mehrpfad-Ultraschall-Durchflussmessgerät des Stands der Technik im Querschnitt durch das Messrohr 1 dargestellt. Fig. 1b zeigt dasselbe Mehrpfad-Ultraschall-Durchflussmessgerät perspektivisch. Beide Figuren sind aus der DE 10 2007 004 936 B4 entnommen. Das Mehrpfad-Ultraschall-Durchflussmessgerät weist hierbei ein Messrohr 1 und zehn Ultraschallwandler 3 auf, welche zusammen mit fünf Ultraschallreflektoren 4 fünf V-förmige Signalpfade 5 bilden. Jeweils zwei Ultraschallwandler 3 bilden ein Ultraschallwandlerpaar 2. Alle fünf V-förmigen Signalpfade 5 bestehen aus zwei geraden Teilabschnitten. Einem ersten geraden Teilabschnitt vom ersten Ultraschallwandler 3 des Ultraschallwandlerpaares 2 zum Ultraschallreflektor 4 und einem zweiten geraden Teilabschnitt vom Ultraschallreflektor 4 zum zweiten Ultraschallwandler 3 des Ultraschallwandlerpaares 2. Jedes dieser Ultraschallwandlerpaare 2 liegt mit einem Ultraschallreflektor 4 in einer Ebene, welche einen vorgegebenen Abstand zur Messrohrachse aufweist. Auch beide geraden Teilabschnitte des jeweiligen V-förmigen Signalpfads 5 liegen in diesen, somit fünf Ebenen, welche von den fünf V-förmigen Signalpfaden 5 aufgespannt werden und welche fünf Ebenen parallel zueinander im Messrohr verlaufen.

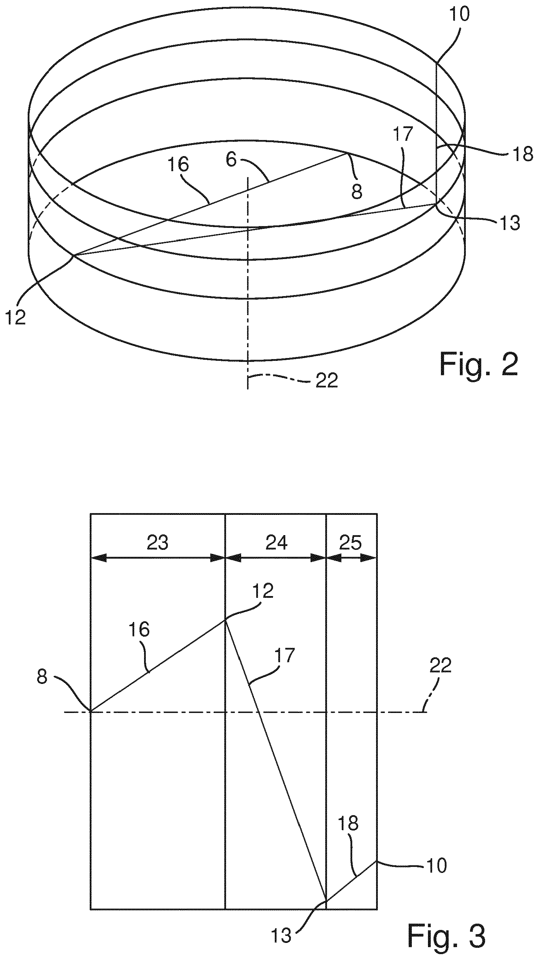

Fig.2 veranschaulicht nun stark vereinfacht die Funktionsweise eines erfindungsgemäßen Ultraschall-Durchflussmessgeräts in einem Modell. Zu sehen ist ein Messrohr 1 und ein erster Signalpfad 6. Auf die Darstellung von Ultraschallwandlern als Sender und/oder Empfänger und auf die Darstellung von Reflexionsflächen wurde der Übersichtlichkeit wegen verzichtet. Dennoch werden die Schnittpunkte des ersten Signalpfads 6 mit dem Messrohr 1 als solche bezeichnet. So sendet der erste Sender 8 das akustische Signal auf den ersten Signalpfad 6 in Richtung der ersten Reflexionsfläche 12 entlang eines ersten geraden Teilabschnitts 16. An der ersten Reflexionsfläche 12 wird das akustische Signal auf dem ersten Signalpfad 6 in Richtung der zweiten Reflexionsfläche 13 entlang eines zweiten geraden Teilabschnitts 17 reflektiert, wo es schließlich auf einen dritten geraden Teilabschnitt 18 des ersten Signalpfads 6 in Richtung des ersten Empfängers 10 reflektiert wird. Der erste Sender 8 liegt dabei in einer ersten Ebene senkrecht zur Messrohrachse 22. Die erste Reflexionsfläche 12 liegt in einer zweiten Ebene senkrecht zur Messrohrachse 22. Die zweite Reflexionsfläche 13 liegt in einer dritten Ebene senkrecht zur Messrohrachse 22, und er erste Empfänger 10 liegt in einer vierten Ebene senkrecht zur Messrohrachse 22. Die Ebenen sind der Einfachheit halber nicht skizziert. Zu sehen sind jedoch deren Schnittkreise mit dem Messrohr 1, auf welchen Schnittkreisen jeweils der erste Sender 8, der erste Empfänger 10 und die erste 12 und zweite Reflexionsfläche 13 bzw. hier in diesem Modell die Schnittpunkte des ersten Signalpfads 6 mit dem Messrohr 1 liegen. Die vier parallelen Ebenen weisen jeweils vorgegebene Abstände zueinander auf. So weist der erste Teilabschnitt 16 eine auf die Messrohrachse 22 projizierte erste Länge auf, ebenso wie der zweite und der dritte Teilabschnitt 17 und 18 eine zweite, respektive dritte, auf die Messrohrachse 22 projizierte, Länge aufweisen, welche den Abständen der Ebenen entsprechen.

Die auf die Messrohrachse 22 projizierten Längen der Teilabschnitte sind in Fig. 3, einem Längsschnitt durch das Messrohr 1, eingezeichnet. Das akustische Signal auf dem ersten Signalpfad erfährt zwischen dem ersten Sender 8 und dem ersten Empfänger 10 zwei Reflexionen; eine erste an der ersten Reflexionsfläche 12 und eine zweite an der zweiten Reflexionsfläche 13. Somit lässt sich der erste Signalpfad in drei gerade Teilabschnitte 16, 17 und 18 aufteilen. Diese weisen jeweils eine auf die Messrohrachse 22 projizierte Länge auf, deren Wert in diesem Ausführungsbeispiel jeweils ungleich Null ist. Der erste gerade Teilabschnitt 16 weist eine erste Länge 23, der zweite Teilabschnitt 17 eine zweite Länge 24 und der dritte gerade Teilabschnitt 18 eine dritte auf die Messrohrachse 22 projizierte Länge auf.

Die Werte dieser Längen 23, 24 und 25 sind erfindungsgemäß abhängig von vom jeweiligen Abstand des jeweiligen geraden Teilabschnitts 16, 17 und 18 zur Messrohrachse 22. Hier ist der erste Wert der ersten Länge 23 größer als der zweite Wert der zweiten Länge 24, welcher wiederum größer ist als der dritte Wert der dritten Länge 25.

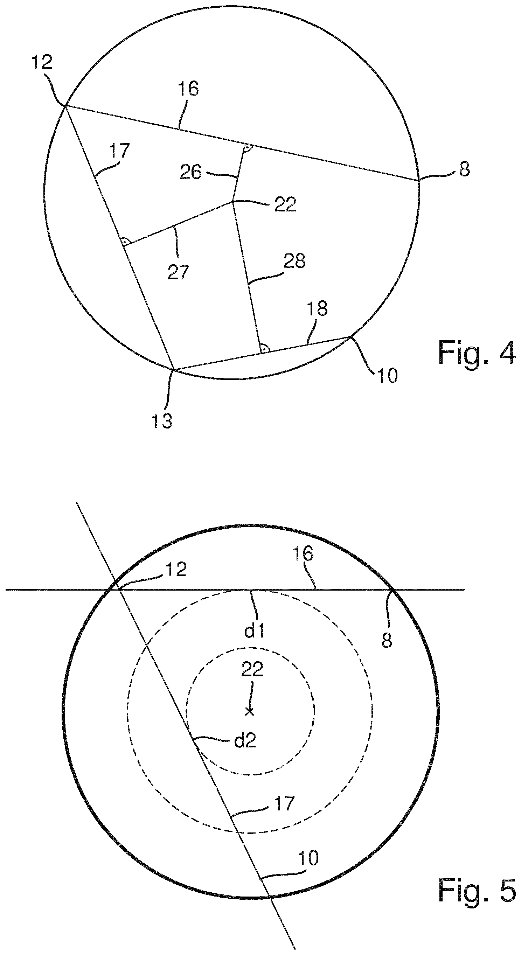

Gemäß Fig. 4 weist jeder Teilabschnitt 16, 17 und 18 einen Abstand 26, 27 und 28 zur Messrohrachse 22 auf. Der erste gerade Teilabschnitt 16 des ersten Signalpfads zwischen erstem Sender 8 und erster Reflexionsfläche 12 weist einen ersten Abstand 26 zur Messrohrachse auf. Der zweite gerade Teilabschnitt 17 des ersten Signalpfads zwischen erster Reflexionsfläche 12 und zweiter Reflexionsfläche 13 weist einen zweiten Abstand 27 zur Messrohrachse auf. Der dritte gerade Teilabschnitt 18 des ersten Signalpfads zwischen zweiter Reflexionsfläche 13 und erstem Empfänger 10 weist einen dritten Abstand 27 zur Messrohrachse auf. Die Abstände 26, 27 und 28 werden wie üblich über das Lot auf die geraden Teilabschnitte bemessen, welches die Messrohrachse 22 schneidet.

Alle genannten Abstände 26, 27 und 28 haben in diesem Ausführungsbeispiel Werte ungleich Null. Jedoch ist es durchaus denkbar, dass einer oder mehrere gerade Teilabschnitte die Messrohrachse schneiden. Die Werte der Abstände 26, 27 und 28 sind hier unterschiedlich groß, hier ist der erste Wert des erstens Abstands 26 kleiner als der zweite Wert des zweiten Abstand 27, welcher wiederum kleiner ist als der dritte Wert des dritten Abstands 28. Aus den Abstandswerten ergeben sich die unterschiedlich großen Werte der auf die Messrohrachse 22 projizierten Längen der Teilabschnitte, wie zu Fig. 3 erläutert.

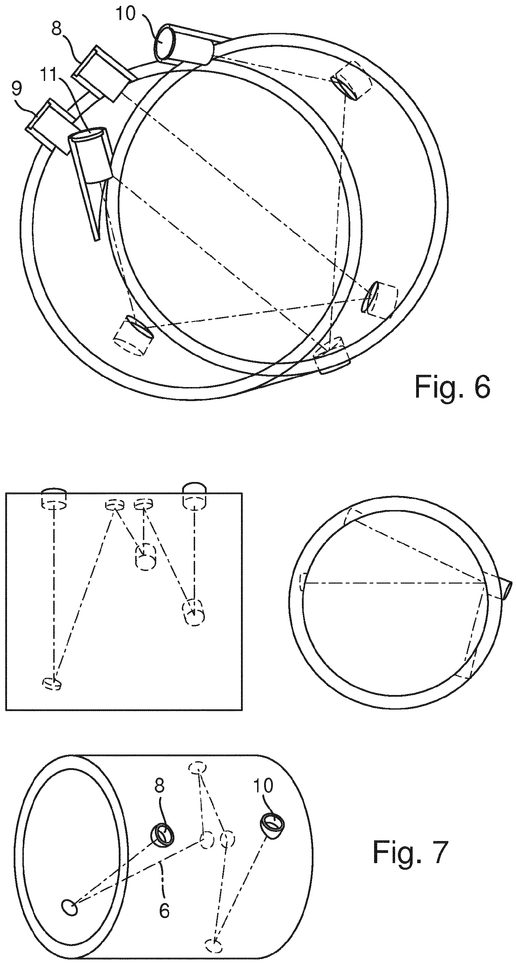

In dem vorhergehenden Ausgestaltungsbeispiel weisen alle Teilabschnitte des ersten Signalpfads eine auf die Messrohrachse projizierte Länge mit einem Wert ungleich Null auf. Jedoch sind auch erfindungsgemäße Ultraschall-Durchflussmessgeräte herzustellen, mit einem oder mehreren Teilabschnitten des ersten Signalpfads mit einem Wert der auf die Messrohrachse 22 projizierte Länge gleich Null. In der nachfolgenden Fig. 7 ist eines dieser erfindungsgemäßen Ultraschall-Durchflussmessgeräte wiederum perspektivisch, im Längs- und im Querschnitt zu sehen.

Doch zunächst soll hier das erfindungsgemäße Messverfahren anhand Fig. 5 näher dargelegt werden. Fig. 5 zeigt ein Messrohr 1 im Querschnitt. Zwei Geraden schneiden die Umkreise mit den Radien d1 und d2 um die Messrohrachse 22, welche in die Zeichenebene hineinzeigt. Des Weiteren schneiden die Geraden das Messrohr 1 in den Punkten 8, 10 und 12, welche hier wiederum den ersten Sender 8, den ersten Empfänger 10 und die erste Reflexionsfläche 12 repräsentieren. Diese Punkte begrenzen den ersten und zweiten geraden Teilabschnitt 16 und 17, welche mit den Geraden zusammenfallen. Somit weist der erste gerade Teilabschnitt 16 den Abstand mit dem Wert d1 zur Messrohrachse auf und der zweite gerade Teilabschnitt 17 weist den Abstand mit dem Wert d2 zur Messrohrachse auf, wobei in diesem Ausführungsbeispiel gilt: d1 > d2. Die geraden Teilabschnitte 16 und 17 liegen jeweils in einer zur Messrohrachse parallele Ebene. Beide Ebenen ragen ebenfalls in die Zeichenebene hinein und sind dadurch nur durch die beiden Geraden dargestellt.

Verglichen mit einem Mehrpfad-Ultraschall-Durchflussmessgerät, wie beispielsweise in Fig. 1 gezeigt, ergeben sich folgende Parallelen und Unterschiede. Die einzelnen Signalpfade des Mehrpfad-Ultraschall-Durchflussmessgeräts der Fig. 1, beim Mehrpfad-Ultraschall-Durchflussmessgerät auch Messpfade genannt, liegen in zueinander und zur Messrohrachse parallelen Ebenen, welche von der Messrohrachse jeweils einen vorgegebenen Abstand aufweisen. Auch die Teilabschnitte des ersten Signalpfads liegen in Ebenen zur Messrohrachse parallel, jedoch schneiden sich diese Ebenen im Bereich der ersten Reflexionsfläche. Somit lassen sich zwei Sekanten durch das Messrohr mit nur einem einzigen Signalpfad abbilden.

Mit dem Laufzeitdifferenzverfahren werden Strömungsgeschwindigkeiten eines durch das Messrohr strömenden Fluids gemessen. Das Strömungsprofil des Fluids ist unter anderem von der Strömungsgeschwindigkeit und Viskosität des Fluids abhängig. Um nun den Durchfluss zu erfassen, werden bei einem Mehrpfad-Ultraschall-Durchflussmessgerät mehrere Strömungsgeschwindigkeiten am mehreren Messrohrstellen mit mehreren Messpfaden gemessen und verrechnet, um das Strömungsprofil bestmöglichst zu erfassen. Die Erfindung erlaubt es nun, das Strömungsprofil analog und gleichwertig zu erfassen, wobei eine wesentlich geringere Anzahl an Ultraschallwandlern als Sender und/oder Empfänger notwendig sind.

Es wird ein akustisches Signal vom ersten Sender 8 auf den ersten Signalpfad zum ersten Empfänger 10 ausgesendet, wobei das akustische Signal auf dem ersten Signalpfad vom ersten Sender zum ersten Empfänger so an der ersten Reflexionsfläche 12 durch das Messrohr reflektiert wird, dass sich das akustische Signal auf dem ersten Signalpfad entlang des ersten 16 und des zweiten geraden Teilabschnitts 17 durch das Messrohr ausbreitet, wobei der erste gerade Teilabschnitt 16 den ersten Abstand d1 zur Messrohrachse 22 aufweist und wobei der zweite gerade Teilabschnitt 17 den zweiten Abstand d2 zur Messrohrachse 22 aufweist.

Fig. 6 zeigt nun ein erfindungsgemäßes Ultraschall-Durchflussmessgerät mit zwei Signalpfaden und daher zwei Sendern und Empfängern. Neben dem ersten Sender 8 und dem ersten Empfänger 10 sind ein zweiter Sender 9 und ein zweiter Empfänger 11 in Bohrungen im Messrohr 1 angeordnet. Das Signal des ersten Signalpfads führt vom ersten Sender 8 zur ersten Reflexionsfläche 12, wo es zur zweiten Reflexionsfläche 13 reflektiert wird, und wird dort wiederum zum ersten Empfänger 10 reflektiert. Analog verläuft das akustische Signal entlang des zweiten Signalpfads vom zweiten Sender 9 über die dritte Reflexionsfläche 14 und die vierte Reflexionsfläche 15 zum zweiten Empfänger 11. Zwischen erstem Sender 8 und erster Reflexionsfläche 12 befindet sich der erste gerade Teilabschnitt 16 des ersten Signalpfads. Zwischen der ersten Reflexionsfläche 12 und der zweiten Reflexionsfläche 13 verläuft das akustische Signal entlang des zweiten geraden Teilabschnitts 17 des ersten Signalpfads. Schließlich begrenzen die zweite Reflexionsfläche 13 und der erste Empfänger 9 den dritten geraden Teilabschnitt 18 des ersten Signalpfads. Gleichermaßen verhält es sich beim zweiten Signalpfad: zwischen zweitem Sender 9 und dritter Reflexionsfläche 14 befindet sich der erste gerade Teilabschnitt 19 des zweiten Signalpfads; zwischen dritter Reflexionsfläche 14 und vierter Reflexionsfläche 15 befindet sich der zweite gerade Teilabschnitt 20 des zweiten Signalpfads; zwischen vierter Reflexionsfläche 15 und zweitem Empfänger 11 befindet sich der dritte gerade Teilabschnitt 21 des zweiten Signalpfads. Alle Sender und Empfänger 8 bis 11 sind als Ultraschallwandler sowohl als Sender als auch als Empfänger betreibbar. Sämtliche Reflexionsflächen 12 bis 15 sind im Messrohr 1 angeordnet. Sie weisen jeweils nicht gezeigte Flächennormalen auf, welche nicht senkrecht auf die Messrohrachse 22 stehen. Der erste Signalpfad und der zweite Signalpfad verlaufen helical um die Messrohrachse und zueinander spiegelbildlich im Messrohr. In der Spiegelebene liegt die Messrohrachse 22. Daher gelten alle anschließend getroffenen Aussagen für den ersten Signalpfad analog für den zweiten Signalpfad.

Vorteile bietet diese Anordnung bei nicht rotationssymmetrischen Strömungsprofilen und/oder insbesondere bei helical um die Messrohrachse verlaufenden Strömungen. Weist eine Strömung ein Strömungsprofil mit Richtungskomponenten tangential zur Messrohrwand und damit senkrecht zur Messrohrachse auf, würde ein einzelner helical um die Messrohrachse umlaufender Signalpfad in oder entgegen dieser Richtungskomponenten verlaufen, was einen Messfehler zur Folge haben könnte. Mit einem zweiten, entgegen dem ersten Signalpfad, helical um die Messrohrachse verlaufenden Signalpfad, welcher mit derselben Gewichtung in die Berechnung des Durchflusses mit eingeht, wird dieser Fehler eliminiert. Eine Alternative zu dieser Lösung zeigt die nächste Figur.

Der erste Abstand 26 des ersten geraden Teilabschnitts des ersten Signalpfads zur Messrohrachse ist ungleich Null und ungleich dem zweiten Abstand 27 des zweiten geraden Teilabschnitts des ersten Signalpfads zur Messrohrachse, welcher wiederum ebenfalls ungleich Null und ungleich dem dritten Abstand 28 des dritten geraden Teilabschnitts des ersten Signalpfads zur Messrohrachse ist, welcher wiederum ebenfalls ungleich Null und ungleich dem ersten Abstand 26 des ersten geraden Teilabschnitts des ersten Signalpfads zur Messrohrachse ist.

Da nicht mehrere gerade Teilabschnitte des ersten Signalpfads mit demselben Abstand zur Messrohrachse existieren, ist eine Summenbildung der Werte der Längen der auf die Messrohrachse projizierten geraden Teilabschnitte des ersten Signalpfads obsolet. Hier ist der erste Wert der Länge des auf die Messrohrachse projizierten ersten geraden Teilabschnitts des ersten Signalpfads ungleich Null und ungleich dem zweiten Wert der Länge des auf die Messrohrachse projizierten zweiten geraden Teilabschnitts des ersten Signalpfads, welcher wiederum ungleich Null und ungleich dem dritten Wert der Länge des auf die Messrohrachse projizierten dritten geraden Teilabschnitts des ersten Signalpfads ist, welcher wiederum ungleich Null und ungleich dem ersten Wert der ersten Länge des auf die Messrohrachse projizierten ersten geraden Teilabschnitts des ersten Signalpfads ist. Die Längen sind der Übersichtlichkeit wegen nicht eingezeichnet. Sie weisen vorgegebene Werte auf, welcher mit einer vorgegebenen Berechnungsvorschrift in Abhängigkeit vom in jeweiligen Abstand des geraden Teilabschnitts ermittelt werden. Sie entsprechen hier normierten Gewichtungsfaktoren eines vergleichbaren Mehrpfad-Ultraschall-Durchflussmessgeräts. Sie werden durch folgende Verfahrensschritte erhalten: Zunächst erfolgt das Auswählen einer Anzahl größer eins von geraden Teilabschnitten des ersten Signalpfads, welche voneinander verschiedene Abstände zur Messrohrachse aufweisen sollen. Dies geschieht analog zur Entwicklung eines Mehrpfadmessgeräts. Je mehr Messpfade respektive Teilabschnitten des ersten Signalpfads mit unterschiedlichen Abstände zur Messrohrachse, desto besser ist das Strömungsprofil mit Messpfade respektive Teilabschnitten des ersten Signalpfads durchzogen und desto genauer kann der Durchfluss bestimmt werden, da beim Laufzeitdifferenzprinzip die Strömungsgeschwindigkeiten gemessen werden und der Durchfluss, insbesondere der Volumendurchfluss auf den Messrohrquerschnitt hochgerechnet wird und über eine höhere Anzahl Messpfade gemittelt werden kann. Bei dem erfindungsgemäßen Ultraschall-Durchflussmessgerät muss, anders als bei einem Mehrpfadmessgerät, der Signalverlust durch die Reflexionen und gegebenenfalls Störungen durch Rohrwellen, das sind Körperschallwellen überragen über das Messrohr, beispielsweise vom Sender zum Empfänger, mitberücksichtigt werden. Bei zu vielen Teilabschnitten des ersten Signalpfads besteht die Gefahr von einer zu geringen Signalenergie des akustischen Signals auf dem Signalpfad am Empfänger. Hier besteht somit ein Optimierungsproblem zwischen nutzbarer Signalenergie und Genauigkeit.

Anschließend werden die Abstände der geraden Teilabschnitte zur Messrohrachse festgelegt. Dies geschieht beispielsweise durch Berechnen mittels einschlägiger Methoden, wie der Gauss-Jacobi-Methode, oder durch einfaches Ablesen aus Tabellen, wie sie beispielsweise im genannten Aufsatz von Tresch, Staubli und Gruber zu finden sind.

In einem dritten Verfahrensschritt werden die Werte der auf die Messrohrachse projizierten Längen der geraden Teilabschnitte, in Abhängigkeit der Anzahl der geraden Teilabschnitte mit demselben Abstand zur Messrohrachse und dem jeweiligen Abstand zur Messrohrachse ermittelt, hier durch Ermitteln von Gewichtungsfaktoren für Messpfade eines Mehrpfad-Ultraschall-Durchflussmessgeräts zur Durchflussmessung nach einer vorgegebenen Berechnungsvorschrift, hier beispielsweise mit der Gauss-Jacobi-Methode, in Abhängigkeit der Abstände der Messpfade zur Messrohrachse, welche Abstände zur Messrohrachse dieselben sind, wie die der geraden Teilabschnitte. Ein Teilen der Gewichtungsfaktoren durch die Anzahl an Messpfaden mit demselben Abstand zur Messrohrachse ist im gezeigten Ausführungsbeispiel logischerweise nicht erforderlich. Werden, wie hier, die Gewichtungsfaktoren mit der Gauss-Jacobi-Methode berechnet bzw. aus der Tabelle abgelesen, werden sie anschließend mit vorgegebenen Normierungsfaktoren $k_i = \sqrt{1 - (d_i/D)^2}$ normiert, wobei $d_i$ für die Abstände der Teilabschnitte respektive der Messpfade zur Messrohrachse steht und $D$ für den Durchmesser des Messrohrs. Das Normieren ist natürlich nur notwendig, wenn die Gewichtungsfaktoren nicht bereits in einer für die Erfindung erfoderlichen Weise ermittelt worden sind. Die Erfindung löst das Problem der Gewichtung der Messpfade bzw. der Teilabschnitte mit unterschiedlichem Abstand zur Messrohrachse zur Bestimmung des Durchflusses geometrisch. Zu Berücksichtigen sind neben den Gewichtungen die Werte der projizierten Längen der Messpfade und deren

Abstände zur Messrohrachse. Der Gauss-Jacobi Methode liegt die Annahme zugrunde, dass alle Messpfade unter demselben Winkel zu einer Ebene, in welcher die Messrohrachse liegt und welche orthogonal zu den Ebenen verläuft, in welchen wiederum die einzelnen Messpfade liegen, im Messrohr verlaufen. Des Weiteren ist ein Messrohr mit einem kreisrunden Querschnitt vorgesehen. Aus den Abständen der einzelnen Messpfade zur Messrohrachse ergeben sich daher deren projizierte Längen auf die Messrohrachse. Entsprechend müssen die Gewichtungsfaktoren noch mit eben diesen projizierten Längen auf die Messrohrachse normiert werden. Da gegebenen falls zwei Messpfade denselben Abstand zur Messrohrachse aufweisen, und somit zweifach mit dem demselben Gewichtungsfaktor in der Durchflussbestimmung Berücksichtigung finden, muss der der erhaltene Wert für die projizierte Läge des entsprechenden Teilabschnitts des erfindungsgemäßen Durchflussmessgeräts noch durch zwei geteilt werden. Die Anzahl der Messpfade ist somit natürlich bei der Normierung zu berücksichtigen.

Anschließen werden die Werte der auf die Messrohrachse projizierten Längen der geraden Teilabschnitte mit denselben Abständen zur Messrohrachse durch Aufteilen der Ergebnisse auf die jeweils vorgesehene Anzahl an geraden Teilabschnitten mit denselben Abständen zur Messrohrachse festgelegt. Auch dieser Schritt kann hier entfallen.

Stehen nun die Anzahl der Teilabschnitte, deren Abstände zur Messrohrachse und deren projizierte Längen auf die Messrohrachse fest, werden die Reflexionsflächen in das Messrohr so eingesetzt, dass das akustische Signal auf dem Weg vom ersten Sender zum ersten Empfänger so den Reflexionsflächen reflektiert wird, dass die entsprechenden geraden Teilabschnitte mit den Abständen und den berechneten Werten der auf die Messrohrachse projizierten Längen entstehen.

Sind mehrere Teilabschnitte eines Signalpfads mit denselben Abständen zur Messrohrachse vorgesehen, müssen deren Werte ihrer auf die Messrohrachse projizierte Längen natürlich angepasst werden. Ihre Summe muss proportional zu den gegebenenfalls normierten Gewichtungsfaktoren sein.

Der erste Abstand ist kleiner gewählt als der zweite Abstand, welcher wiederum kleiner ist, als der dritte Abstand. Daraus folgt hier in diesem Ausführungsbeispiel, dass der erste Wert der projizierten Länge des ersten Teilabschnitts des ersten Signalpfads größer ist als der zweite Wert der auf die Messrohrachse projizierte Länge des zweiten Teilabschnitts des ersten Signalpfads, welcher wiederum größer ist als der dritte Wert der auf die Messrohrachse projizierte Länge des dritten Teilabschnitts des ersten Signalpfads. Der erste, der zweite und der dritte Teilabschnitt verlaufen jeweils windschief zueinander im Messrohr. Natürlich können weitere Reflexionsflächen im Messrohr vorgesehen werden, an welchen das akustische Signal und/oder die akustischen Signale des ersten und/oder des zweiten akustischen Signalpfads reflektiert werden. Diese müssen nicht zwingend eine nicht senkrechte Flächennormale zur Messrohrachse aufweisen. Auch kann das akustische Signal auf einem Signalpfad abschnittsweise senkrecht zur Messrohrachse im Messrohr verlaufen, dieser Teilabschnitt weist dann eine auf die Messrohrachse projizierte Länge mit dem Wert Null auf. Der Weg des Signals entlang dieses Teilabschnitts trägt jedoch nicht zur Durchflussmessung mittels Laufzeitdifferenzverfahren bei, sondern wird beispielsweise zur Bestimmung der Schallgeschwindigkeit genutzt. Um Dralleffekte zu kompensieren können auch hier zwei gegensätzlich verlaufende Teilabschnitte vorgesehen sein. Bisher wurden Teilabschnitte gezeigt, welche einen Abstand zur Messrohrachse ungleich Null aufwiesen, dies ist jedoch kein Merkmal der Erfindung. Auch die Art der Berechnung der genannten Gewichtungsfaktoren mittels der Gauss-Jacobi- oder der OWICS-Methode ist nicht zwingend erforderlich. Sind andere Methoden zur Berechnung von Gewichtungsfaktoren zur Abbildung von Strömungsverhältnissen im Messrohr bekannt, sind diese ebenfalls auf die Erfindung anwendbar. Zu Berücksichtigen sind gegebenenfalls die Werte der projizierten Längen der Messpfade und deren Abstände zur Messrohrachse.

In Fig. 7 ist eine weitere Ausgestaltung der Erfindung dargestellt. Das akustische Signal entlang des ersten Signalpfads 6 wird unter einem Richtungsvektor senkrecht zur Messrohrachse in das Messrohr vom ersten Sender 8 eingestrahlt. Auf dem Weg zum ersten Empfänger 10 wird es an fünf Reflexionsflächen jeweils einmal reflektiert, bevor es, wiederum unter einem Richtungsvektor senkrecht zur Messrohrachse, auf den ersten Empfänger 10 trifft. Sender 8 und Empfänger 10 können außerhalb des Messrohrs 1, beispielsweise an dessen Außenwandung, angeordnet sein. Es handelt sich somit um eine Art Clamp-On-Ultraschall-Durchflussmessgerät. Weitere Vorteile ergeben sich durch die Art der Signalführung entlang des ersten Signalpfads. So entfällt z.B. das bei üblichen Clamp-On-Systemen bekannte Problem der Temperatur- und/oder Mediumsabhängigkeit des Einstrahlwinkels durch die senkrechte Einstrahlung.

Wie auch schon in den anderen Ausführungsbeispielen wird ein akustisches Signal zuerst vom Sender zum Empfänger gesendet und anschließend vom Empfänger zum Sender, um eine Laufzeitdifferenz zu erhalten und um schließlich in bekannter Art und Weise den Durchfluss durch das Messrohr zu ermitteln.

## Bezugszeichenliste

| 1 | Messrohr |
|---|---|
| 2 | Ultraschallwandlerpaar |
| 3 | Ultraschallwandler |
| 4 | Ultraschallreflektor |
| 5 | V-förmiger Signalpfad |
| 6 | Erster Signalpfad |
| 7 | Zweiter Signalpfad |
| 8 | Erster Sender |
| 9 | Zweiter Sender |
| 10 | Erster Empfänger |
| 11 | Zweiter Empfänger |
| 12 | Erste Reflexionsfläche |
| 13 | Zweite Reflexionsfläche |
| 14 | Dritte Reflexionsfläche |
| 15 | Vierte Reflexionsfläche |
| 16 | Erster gerader Teilabschnitt des ersten Signalpfads |
| 17 | Zweiter gerader Teilabschnitt des ersten Signalpfads |
| 18 | Dritter gerader Teilabschnitt des ersten Signalpfads |
| 19 | Erster gerader Teilabschnitt des zweiten Signalpfads |
| 20 | Zweiter gerader Teilabschnitt des zweiten Signalpfads |
| 21 | Dritter gerader Teilabschnitt des zweiten Signalpfads |
| 22 | Messrohrachse |
| 23 | Länge des auf die Messrohrachse projizierten ersten geraden Teilabschnitts des ersten Signalpfads |

24  Länge des auf die Messrohrachse projizierten zweiten geraden Teilabschnitts des ersten Signalpfads

25  Länge des auf die Messrohrachse projizierten dritten geraden Teilabschnitts des ersten Signalpfads

26  Abstand des ersten geraden Teilabschnitts des ersten Signalpfads zur Messrohrachse

27  Abstand des dritten geraden Teilabschnitts des ersten Signalpfads zur Messrohrachse

28  Abstand des zweiten geraden Teilabschnitts des ersten Signalpfads zur Messrohrachse

**Patentansprüche**

1. Ultraschall-Durchflussmessgerät, welches ein Messrohr (1) mit einer geraden Messrohrachse (22), einen Sender (8) zum Senden eines akustischen Signals auf einen ersten Signalpfad (6), einen Empfänger (10) zum Empfangen des akustischen Signals auf dem ersten Signalpfad und zumindest eine erste Reflexionsfläche (12) umfasst, an welcher das akustische Signal auf dem ersten Signalpfad zumindest einmal reflektiert wird, wobei das auf die erste Reflexionsfläche einfallende akustische Signal entlang eines ersten geraden Teilabschnitts (16) verläuft, welcher einen ersten Abstand (26) zur Messrohrachse aufweist, wobei der Sender, der Empfänger und die erste Reflexionsfläche so zueinander ausgerichtet und im oder am Messrohr angeordnet sind, dass das akustische Signal auf dem ersten Signalpfad vom ersten Sender zum ersten Empfänger so an der zumindest einen ersten Reflexionsfläche reflektiert wird, dass das an der ersten Reflexionsfläche reflektierte akustische Signal auf dem ersten Signalpfad entlang eines zweiten geraden Teilabschnitts (17) durch das Messrohr verläuft, **dadurch gekennzeichnet,**
**dass** das Messrohr einen elliptischen, insbesondere kreisrunden, Querschnitt aufweist, und dass der zweite gerade Teilabschnitt einen zweiten Abstand (27) zur Messrohrachse aufweist, wobei der erste Abstand (26) ungleich dem zweiten Abstand (27) ist, und wobei die Summe aller auf die Messrohrachse projizierten Längen aller Teilabschnitte des ersten Signalpfads mit dem ersten Abstand zur Messrohrachse in einem die Messrohrachse umfassenden Längsschnitt durch das Messrohr (1) einen vorgegebenen ersten Wert (23) aufweist und wobei die Summe aller auf die Messrohrachse projizierten Längen aller Teilabschnitte des ersten Signalpfads mit dem zweiten Abstand zur Messrohrachse in dem die Messrohrachse umfassenden Längsschnitt durch das Messrohr (1) einen vorgegebenen zweiten Wert (24) aufweist, wobei der erste Wert (23) ungleich dem zweiten Wert (24) ist, und wobei der erste und der zweite Wert ungleich Null sind, und wobei eine Flächennormale der ersten Reflexionsfläche einen Winkel in Bezug auf die Messrohrachse aufweist, welcher von 90° verschieden ist.

2. Ultraschall-Durchflussmessgerät nach Anspruch 1,
**dadurch gekennzeichnet,**
**dass** der Sender, der Empfänger und die erste Reflexionsfläche so zueinander ausgerichtet und im oder am Messrohr angeordnet sind, dass das akustische Signal auf dem ersten Signalpfad vom ersten Sender zum ersten Empfänger helixförmig um die Messrohrachse verläuft.

3. Ultraschall-Durchflussmessgerät nach einem der Ansprüche 1 oder 2,
**dadurch gekennzeichnet,**
**dass** der erste und der zweite Abstand ungleich Null sind.

4. Ultraschall-Durchflussmessgerät nach einem der Ansprüche 1 bis 3,
**dadurch gekennzeichnet,**
**dass** der erste Abstand kleiner ist als der zweite Abstand und, dass die Summe aller Werte der auf die Messrohrachse projizierten Längen aller Teilabschnitte des ersten Signalpfads mit dem ersten Abstand zur Messrohrachse größer ist als die Summe aller Werte der auf die Messrohrachse projizierten Längen aller Teilabschnitte des ersten Signalpfads mit dem zweiten Abstand zur Messrohrachse.

5. Ultraschall-Durchflussmessgerät nach einem der Ansprüche 1 bis 4,
**dadurch gekennzeichnet,**
**dass** es zumindest eine weitere, zweite Reflexionsfläche umfasst, wobei der Sender, der Empfänger und die erste Reflexionsfläche und die zumindest eine weitere, zweite Reflexionsfläche so zueinander ausgerichtet und im oder am Messrohr angeordnet sind, dass das akustische Signal auf dem ersten Signalpfad vom ersten Sender an der ersten und an der zumindest einen weiteren, zweiten Reflexionsfläche so zum ersten Empfänger reflektiert wird, dass das akustische Signal auf dem ersten Signalpfad entlang zumindest eines weiteren, dritten geraden Teilabschnitts durch das Messrohr verläuft, wobei der dritte gerade Teilabschnitt einen dritten Abstand zur Messrohrachse aufweist, wobei der dritte Abstand ungleich dem ersten und dem zweiten Abstand ist, und wobei die Summe aller auf die Messrohrachse projizierten Längen aller Teilabschnitte des ersten Signalpfads mit dem dritten Abstand zur Messrohrachse einen vorgegebenen dritten Wert aufweist, welcher ungleich dem ersten Wert und ungleich dem zweiten Wert ist, und wobei der dritte Wert ungleich Null ist.

6. Ultraschall-Durchflussmessgerät nach einem der Ansprüche 1 bis 5,

**dadurch gekennzeichnet,**
**dass** es zumindest einen weiteren, zweiten Sender zum Senden eines akustischen Signals auf einen zweiten Signalpfad, zumindest einen weiteren, zweiten Empfänger zum Empfangen eines akustischen Signals auf dem zweiten Signalpfad und zumindest eine weitere, dritte Reflexionsfläche umfasst, wobei der zweite Sender, der zweite Empfänger und die zumindest eine weitere, dritte Reflexionsfläche so zueinander ausgerichtet und im oder am Messrohr angeordnet sind, dass das akustische Signal auf dem zweiten Signalpfad vom zweiten Sender so an der zumindest einen weiteren, dritten Reflexionsfläche zum zweiten Empfänger reflektiert wird, dass das akustische Signal auf dem zweiten Signalpfad entlang zumindest eines vierten und zumindest eines fünften geraden Teilabschnitts durch das Messrohr verläuft, wobei der vierte gerade Teilabschnitt einen vierten Abstand zur Messrohrachse aufweist und der fünfte gerade Teilabschnitt einen fünften Abstand zur Messrohrachse aufweist, wobei der vierte Abstand ungleich dem fünften Abstand ist, und wobei die Summe aller auf die Messrohrachse projizierten Längen aller Teilabschnitte des zweiten Signalpfad mit dem vierten Abstand zur Messrohrachse einen vorgegebenen vierten Wert aufweist und wobei die Summe aller auf die Messrohrachse projizierten Längen aller Teilabschnitte des zweiten Signalpfad mit dem fünften Abstand zur Messrohrachse einen vorgegebenen fünften Wert aufweist, wobei der vierte Wert ungleich dem fünften Wert ist, und wobei der vierte und der fünfte Wert ungleich Null sind.

7. Ultraschall-Durchflussmessgerät nach Anspruch 6, **dadurch gekennzeichnet,**
**dass** es zumindest eine weitere, vierte Reflexionsfläche umfasst, wobei der zweite Sender, der zweite Empfänger und die dritte Reflexionsfläche und die zumindest eine weitere, vierte Reflexionsfläche so zueinander ausgerichtet und im oder am Messrohr angeordnet sind, dass das akustische Signal auf dem zweiten Signalpfad vom zweiten Sender an der dritten und an der zumindest einen weiteren, vierten Reflexionsfläche so zum zweiten Empfänger reflektiert wird, dass das akustische Signal auf dem zweiten Signalpfad entlang zumindest eines weiteren, sechsten geraden Teilabschnitts durch das Messrohr verläuft, wobei der sechste gerade Teilabschnitt einen sechsten Abstand zur Messrohrachse aufweist, wobei der sechste Abstand ungleich dem vierten und dem fünften Abstand ist, und wobei die Summe aller auf die Messrohrachse projizierten Längen aller Teilabschnitte des zweiten Signalpfads mit dem sechsten Abstand zur Messrohrachse einen vorgegebenen sechsten Wert aufweist, welcher ungleich dem vierten Wert und ungleich dem fünften Wert ist, und wobei der sechste Wert ungleich Null ist.

8. Ultraschall-Durchflussmessgerät nach einem der Ansprüche 6 oder 7, **dadurch gekennzeichnet,**
**dass** der erste Signalpfad und der zweite Signalpfad spiegelbildlich zueinander im Messrohr verlaufen.

9. Ultraschall-Durchflussmessgerät nach einem der vorhergehenden Ansprüche, **dadurch gekennzeichnet, dass** das Ultraschall-Durchflussmessgerät einen oder mehrere konkave Spiegel umfasst, auf denen die erste, zweite, dritte und/oder vierte Reflexionsflächen angeordnet sind.

10. Verfahren zur Messung des Durchflusses eines Mediums durch ein Messrohr mit einer geraden Messrohrachse mittels akustischen Signalen nach dem Laufzeitdifferenzprinzip, wobei ein erstes akustisches Signal auf einem ersten Signalpfad von einem ersten Sender so an zumindest einer ersten Reflexionsfläche zu einem ersten Empfänger durch das Messrohr reflektiert wird, dass sich das akustische Signal auf dem ersten Signalpfad entlang zumindest eines ersten und zumindest eines zweiten geraden Teilabschnitts durch das Messrohr ausbreitet, wobei der erste gerade Teilabschnitt einen ersten Abstand zur Messrohrachse aufweist und wobei der zweite gerade Teilabschnitt einen zweiten Abstand zur Messrohrachse aufweist, wobei der erste Abstand ungleich dem zweiten Abstand ist, und wobei die Summe aller auf die Messrohrachse projizierten Längen aller Teilabschnitte des ersten Signalpfads mit dem ersten Abstand zur Messrohrachse in einem die Messrohrachse umfassenden Längsschnitt durch das Messrohr (1) einen vorgegebenen ersten Wert aufweist und wobei die Summe aller auf die Messrohrachse projizierten Längen aller Teilabschnitte des ersten Signalpfads mit dem zweiten Abstand zur Messrohrachse in dem die Messrohrachse umfassenden Längsschnitt durch das Messrohr (1) einen vorgegebenen zweiten Wert aufweist, wobei der erste Wert ungleich des zweiten Werts ist, und wobei der erste und der zweite Wert ungleich Null sind und wobei eine Flächennormale der ersten Reflexionsfläche einen Winkel in Bezug auf die Messrohrachse aufweist, welcher von 90° verschieden ist.

11. Verfahren nach Anspruch 10, **dadurch gekennzeichnet,**
**dass** sich jeweils zwei Teilabschnitte des ersten Signalpfads spiegelbildlich im Messrohr gegenüberliegen.

12. Verfahren nach Anspruch 10, **dadurch gekennzeichnet,**
**dass** ein zweites akustisches Signal auf einem zweiten Signalpfad von einem zweiten Sender so an zumindest einer weiteren, dritten Reflexionsfläche zu einem zweiten Empfänger durch das Messrohr reflektiert wird, dass sich das akustische Signal auf dem zweiten Signalpfad entlang zumindest eines vierten und zumindest eines fünften geraden Teilabschnitts durch das Messrohr ausbreitet, wobei der vierte gerade Teilabschnitt einen vierten Abstand zur Messrohrachse aufweist und wobei der fünfte gerade Teilabschnitt einen fünften Abstand zur Messrohrachse aufweist, wobei der vierte Abstand ungleich dem fünften Abstand ist, und wobei die Summe aller auf die Messrohrachse projizierten Längen aller Teilabschnitte des zweiten Signalpfads mit dem vierten Abstand zur Messrohrachse einen vorgegebenen vierten Wert aufweist und wobei die Summe aller auf die Messrohrachse projizierten Längen aller Teilabschnitte des zweiten Signalpfads mit dem fünften Abstand zur Messrohrachse einen vorgegebenen fünften Wert aufweist, wobei der vierte Wert ungleich dem fünften Wert ist, und wobei der vierte und der fünfte Wert ungleich Null sind.

13. Verfahren nach Anspruch 12,
**dadurch gekennzeichnet,**
**dass** sich der erste und der zweite Signalpfad spiegelbildlich im Messrohr gegenüberliegen und bei der Berechnung des Durchflusses gleich gewichtet werden.

14. Verfahren nach Anspruch 12,
**dadurch gekennzeichnet,**
**dass** sich der erste und der zweite Signalpfad durch Drehung um die Messrohrachse ineinander überführen lassen.

**Claims**

1. Ultrasonic flowmeter, which comprises a measuring tube (1) with a straight measuring tube axis (22), a transmitter (8) designed to transmit an acoustic signal on a first signal path (6), a receiver (10) designed to receive the acoustic signal on the first signal path and at least a first reflection surface (12) at which the acoustic signal is reflected at least once on the first signal path, wherein the acoustic signal acting on the first reflection surface extends along a first straight subsection (16), said section having a first distance (26) in relation to the measuring tube axis, wherein the transmitter, the receiver and the first reflection surface are aligned in relation to one another and are arranged in or on the measuring tube in such a way that the acoustic signal is reflected on the first signal path from the first transmitter to the first receiver at the at least one first reflection surface in such a way that the acoustic signal reflected at the first reflection surface extends on the first signal path along a second straight subsection (17),
**characterized in that**
the measuring tube has an elliptical, particularly circular cylindrical, cross-section, and **in that** the second straight subsection has a second distance (27) in relation to the measuring tube axis, wherein the first distance (26) is different to the second distance (27), and wherein the sum of all the lengths - projected onto the measuring tube axis - of all the sub-sections of the first signal path with the first distance in relation to the measuring tube axis in a longitudinal section encompassing the measuring tube axis has a predefined first value (23), and wherein the sum of all the lengths - projected onto the measuring tube axis - of all the sub-sections of the first signal path with the second distance in relation to the measuring tube axis in the longitudinal section encompassing the measuring tube axis - has a predefined second value (24), wherein the first value (23) is different to the second value (24), and wherein the first and the second value are not equal to zero, and wherein a surface normal of the first reflection surface has an angle in relation to the measuring tube axis that is different to 90°.

2. Ultrasonic flowmeter as claimed in Claim 1,
**characterized in that**
the transmitter, the receiver and the first reflection surface are aligned with one another and arranged in or on the measuring tube in such a way that the acoustic signal extends on the first signal path from the first transmitter to the first receiver in a helical manner around the measuring tube axis.

3. Ultrasonic flowmeter as claimed in one of the Claims 1 or 2,
**characterized in that**
the first and the second distance are not equal to zero.

4. Ultrasonic flowmeter as claimed in one of the Claims 1 to 3,
**characterized in that**
the first distance is less than the second distance and **in that** the sum of all the values of the lengths - projected onto the measuring tube axis - of all the sub-sections of the first signal path with the first distance in relation to the measuring tube axis is greater than the sum of all the values of the lengths - projected onto the measuring tube axis - of all the sub-sections of the first signal path with the second distance in relation to the measuring tube axis.

5. Ultrasonic flowmeter as claimed in one of the Claims 1 to 4,
**characterized in that**
it comprises at least one additional, second reflection surface, wherein the transmitter, the receiver and the first reflection surface and the at least one additional, second reflection surface are aligned with one another and are arranged in or on the measuring tube in such a way that the acoustic signal on the first signal path from the first transmitter to the first receiver is reflected at the first and at least at the additional, second reflection surface in such a way that the acoustic signal on the first signal path extends through the measuring tube along at least an additional, third straight subsection, wherein the third straight subsection has a third distance in relation to the measuring tube axis, said third distance being different to the first and the second distance, and wherein the sum of all the lengths - projected onto the measuring tube axis - of all the sub-sections of the first signal path with the third distance in relation to the measuring tube axis has a predefined third value, which is different to the first value and different to the second value, and wherein the third value is not equal to zero.

6. Ultrasonic flowmeter as claimed in one of the Claims 1 to 5,
**characterized in that**
it comprises at least an additional, second transmitter designed to transmit an acoustic signal on a second signal path, at least an additional, second receiver designed to receive an acoustic signal on the second signal path and at least an additional, third reflection surface, wherein the second transmitter, the second receiver and at least an additional, third reflection surface are aligned with one another and are arranged in or on the measuring tube in such a way that the acoustic signal on the second signal path from the second transmitter to the second receiver is reflected at the at least one additional, third reflection surface in such a way that the acoustic signal on the second signal path extends through the measuring tube along at least a fourth and at least a fifth straight subsection, wherein the fourth straight subsection has a fourth distance in relation to the measuring tube axis and the fifth straight subsection has a fifth distance in relation to the measuring tube axis, wherein the fourth distance is different to the fifth distance, and wherein the sum of all the lengths - projected onto the measuring tube axis - of all the sub-sections of the second signal path with the fourth distance in relation to the measuring tube axis has a predefined fourth value, and wherein the sum of all the lengths - projected onto the measuring tube axis - of all the sub-sections of the second signal path with the fifth distance in relation to the measuring tube axis has a predefined fifth value, wherein the fourth value is different to the fifth value and wherein the fourth and the fifth value are unequal to zero.

7. Ultrasonic flowmeter as claimed in Claim 6,
**characterized in that**
it comprises at least an additional fourth reflection surface, wherein the second transmitter, the second receiver and the third reflection surface and the at least one additional fourth reflection surface are aligned with one another and are arranged in or on the measuring tube in such a way that the acoustic signal on the second signal path from the second transmitter to the second receiver is reflected at the third and at the at least one additional, fourth reflection surface in such a way that the acoustic signal on the second signal path extends through the measuring tube along at least an additional sixth straight subsection, wherein the sixth straight subsection has a sixth distance in relation to the measuring tube axis, wherein the sixth distance is different to the fourth and the fifth distance, and wherein the sum of all the lengths - projected onto the measuring tube axis - of all the sub-sections of the second signal path with the sixth distance in relation to the measuring tube axis has a predefined sixth value, which is different to the fourth value and different to the fifth value, and wherein the sixth value is not equal to zero.

8. Ultrasonic flowmeter as claimed in one of the Claims 6 or 7,
**characterized in that**
the first signal path and the second signal path are mirror-inverted in relation to one another in the measuring tube.

9. Ultrasonic flowmeter as claimed in one of the previous claims,
**characterized in that** the ultrasonic flowmeter comprises one or more concave mirrors on which the first, the second, the third and/or the fourth reflection surface are arranged.

10. Procedure designed to measure the flow of a medium through a measuring tube with a straight measuring tube axis using acoustic signals according to the principle of transit time difference, wherein a first acoustic signal on a first signal path through the measuring tube from a first transmitter to a first receiver is reflected at at least a first reflection surface in such a way that the acoustic signal on the first signal path propagates through the measuring tube along at least a first and at least a second straight subsection, wherein the first straight subsection has a first distance in relation to the measuring tube axis and wherein the second straight subsection has a second distance in relation to the measuring tube axis, wherein the first distance is different to the second distance, and wherein the sum of all the lengths - projected onto the measuring tube axis - of all the sub-sections of the first signal path with the first distance in relation to the measuring tube axis in a longitudinal section through the measuring tube (1) encompassing the measuring tube axis has a predefined first value, and wherein the sum of all the lengths - projected onto the measuring tube axis - of all the sub-sections of the first signal path with the second distance in relation to the measuring tube axis in the longitudinal section through the measuring tube (1) encompassing the measuring tube axis has a predefined second value, wherein the first value is different to the second value and wherein the first and the second value are not equal to zero, and wherein a surface normal of the first reflection surface has an angle in relation to the measuring tube axis that is different to 90°.

11. Procedure as claimed in Claim 10,
    **characterized in that**
    two sub-sections of the first signal path are arranged opposite one another in a mirror-inverted manner in the measuring tube.

12. Procedure as claimed in Claim 10,
    **characterized in that**
    a second acoustic signal on a second signal path through the measuring tube from a second transmitter to a second receiver is reflected at at least an additional, third reflection surface in such a way that the acoustic signal propagates through the measuring tube on the second signal path along at least a fourth and at least a fifth straight subsection, wherein the fourth straight subsection has a fourth distance in relation to the measuring tube axis and the fifth straight subsection has a fifth distance in relation to the measuring tube axis, wherein the fourth distance is different to the fifth distance, and wherein the sum of all the lengths - projected onto the measuring tube axis - of all the sub-sections of the second signal path with the fourth distance in relation to the measuring tube axis has a predefined fourth value and wherein the sum of all the lengths - projected onto the measuring tube axis - of all the sub-sections of the second signal path with the fifth distance in relation to the measuring tube axis has a predefined fifth value, wherein the fourth value is different to the fifth value, and wherein the fourth and the fifth value are not equal to zero.

13. Procedure as claimed in Claim 12,
    **characterized in that**
    the first and the second signal path are arranged opposite one another in the measuring tube in a mirror-inverted manner and are given equal weighting in the calculation of the flow.

14. Procedure as claimed in Claim 12,
    **characterized in that**
    the first and the second signal path coincide by a rotation around the measuring tube axis.

## Revendications

1. Débitmètre à ultrasons, lequel comprend un tube de mesure (1) avec un axe de tube de mesure droit (22), un émetteur (8) destiné à l'émission d'un signal acoustique sur un premier trajet de signal (6), un récepteur (10) destiné à la réception du signal acoustique sur le premier trajet de signal et au moins une première surface de réflexion (12), sur laquelle le signal acoustique est réfléchi au moins une fois sur le premier trajet de signal, le signal acoustique incident sur la première surface de réflexion s'étendant le long d'une première section partielle droite (16), laquelle section présente une premier distance (26) par rapport à l'axe de tube de mesure,
   l'émetteur, le récepteur et la première surface de réflexion étant alignés les uns par rapport aux autres et disposés dans ou sur le tube de mesure, de telle sorte que le signal acoustique sur le premier trajet de signal soit réfléchi du premier émetteur vers le premier récepteur sur l'au moins une première surface de réflexion, de telle manière que le signal acoustique réfléchi à la première surface de réflexion s'étend sur le premier trajet de signal le long d'une deuxième section partielle droite (17),
   **caractérisé**
   **en ce que** le tube de mesure présente une section elliptique, notamment cylindrique circulaire, et
   **en ce que** la deuxième section partielle droite présente une deuxième distance (27) par rapport à l'axe de tube de mesure, la première distance (26) étant différente de la deuxième distance (27), et la somme de toutes les longueurs - projetées sur l'axe de tube de mesure de l'ensemble des sections partielles du premier trajet de signal avec la première distance par rapport à l'axe de tube de mesure dans une coupe longitudinale englobant l'axe de tube de mesure - présentant une premier valeur prédéfinie (23), et la somme de toutes les longueurs - projetées sur l'axe de tube de mesure de l'ensemble des sections partielles du premier trajet de signal avec la deuxième distance par rapport à l'axe de tube de mesure dans la coupe longitudinale englobant l'axe de tube de mesure - présentant une deuxième valeur prédéfinie (24), la première valeur (23) étant différente de la deuxième valeur (24), et la première et la deuxième valeur étant différentes de zéro, et une normale à la première surface de réflexion présentant un angle par rapport à l'axe de tube de mesure, qui est différent de 90°.

2. Débitmètre à ultrasons selon la revendication 1,
   **caractérisé**
   **en ce que** l'émetteur, le récepteur et la première surface de réflexion sont alignés les uns par rapport aux autres et disposés dans ou sur le tube de mesure, de telle sorte que le signal acoustique s'étend sur le premier trajet de signal du premier émetteur vers le premier récepteur sous forme d'hélice autour de l'axe de tube de mesure.

3. Débitmètre à ultrasons selon l'une des revendications 1 ou 2,
   **caractérisé**
   **en ce que** la première et la deuxième distance sont différentes de zéro.

4. Débitmètre à ultrasons selon l'une des revendications 1 à 3,
   **caractérisé**
   **en ce que** la première distance est inférieure à la deuxième distance, et **en ce que** la somme de toutes les valeurs des longueurs projetées sur l'axe de tube de mesure de l'ensemble des sections partielles du premier trajet de signal avec la première distance par rapport à l'axe de tube de mesure est supérieure à la somme de toutes les valeurs des longueurs projetées sur l'axe de tube de mesure de l'ensemble des sections partielles du premier trajet de signal avec la deuxième distance par rapport à l'axe de tube de mesure.

5. Débitmètre à ultrasons selon l'une des revendications 1 à 4,
   **caractérisé**
   **en ce qu'**il comprend au moins une autre, deuxième surface de réflexion, l' émetteur, le récepteur et la première surface de réflexion et l'au moins une autre, deuxième surface de réflexion, étant alignés les uns par rapport aux autres et disposés dans ou sur le tube de mesure, de telle sorte que le signal acoustique soit réfléchi sur le premier trajet de signal du premier émetteur sur la première et sur l'au moins une autre, deuxième surface de réflexion, vers le premier récepteur, de telle manière que le signal acoustique s'étend sur le premier trajet de signal le long d'au moins une autre, troisième section partielle droite à travers le tube de mesure, la troisième section partielle droite présentant une troisième distance par rapport à l'axe de tube de mesure, la troisième distance étant différente de la première et de la deuxième distance, et la somme de toutes les longueurs - projetées sur l'axe de tube de mesure de l'ensemble des sections partielles du premier trajet de signal avec la troisième distance par rapport à l'axe de tube de mesure - présentant une troisième valeur prédéfinie, laquelle est différente de la première valeur et différente de la deuxième valeur, et la troisième valeur étant différente de zéro.

6. Débitmètre à ultrasons selon l'une des revendications 1 à 5,
   **caractérisé**
   **en ce qu'**il comprend au moins un autre, deuxième émetteur destiné à émettre un signal acoustique sur un deuxième trajet de signal, au moins un autre, deuxième récepteur destiné à la réception d'un signal acoustique sur le deuxième trajet de signal et au moins une autre, troisième surface de réflexion, le deuxième émetteur, le deuxième récepteur et l'au moins une autre, troisième surface de réflexion étant alignés les uns par rapport aux autres et disposés dans ou sur le tube de mesure, de telle sorte que le signal acoustique soit réfléchi sur le deuxième trajet de signal du deuxième émetteur sur l'au moins une autre, troisième surface de réflexion, vers le deuxième récepteur, de telle manière que le signal acoustique s'étend sur le deuxième trajet de signal le long d'au moins une quatrième et au moins une cinquième section partielle droite à travers le tube de mesure, la quatrième section partielle droite présentant une quatrième distance par rapport à l'axe de tube de mesure et la cinquième section partielle droite présentant une cinquième distance par rapport à l'axe de tube de mesure, la quatrième distance étant différente de la cinquième distance, et la somme de toutes les longueurs - projetées sur l'axe de tube de mesure de l'ensemble des sections partielles du deuxième trajet de signal avec la quatrième distance par rapport à l'axe de tube de mesure - présentant une quatrième valeur prédéfinie, et la somme de toutes les longueurs - projetées sur l'axe de tube de mesure de l'ensemble des sections partielles du deuxième trajet de signal avec la cinquième distance par rapport à l'axe de tube de mesure - présentant une cinquième valeur prédéfinie, la quatrième valeur étant différente de la cinquième valeur et la quatrième et la cinquième valeur étant différentes de zéro.

7. Débitmètre à ultrasons selon la revendication 6,
   **caractérisé**
   **en ce qu'**il comprend au moins une autre, quatrième surface de réflexion, le deuxième émetteur, le deuxième récepteur et la troisième surface de réflexion et l'au moins une autre, quatrième surface de réflexion, étant alignés les uns par rapport aux autres et disposés dans ou sur le tube de mesure, de telle sorte que le signal acoustique soit réfléchi sur le deuxième trajet de signal du deuxième émetteur sur la troisième et sur l'au moins une autre, quatrième surface de réflexion, vers le deuxième récepteur, de telle manière que le signal acoustique s'étend sur le deuxième trajet de signal le long d'au moins une autre, sixième section partielle droite à travers le tube de mesure, la sixième section partielle droite présentant une sixième distance par rapport à l'axe de tube de mesure, la sixième distance étant différente de la quatrième et de la cinquième distance, et la somme de toutes les longueurs - projetées sur l'axe de tube de mesure de l'ensemble des sections partielles du deuxième trajet de signal avec la sixième distance par rapport à l'axe de tube de mesure - présentant une sixième valeur prédéfinie, laquelle est différente de la quatrième valeur et différente de la cinquième valeur, et la sixième valeur étant différente de zéro.

8. Débitmètre à ultrasons selon l'une des revendications 6 ou 7,
   **caractérisé**
   **en ce que** le premier trajet de signal et le deuxième trajet de signal s'étendent selon une symétrie spéculaire à l'intérieur du tube de mesure.

9. Débitmètre à ultrasons selon l'une des revendications précédentes, **caractérisé en ce que** le débitmètre à ultrasons comprend un ou plusieurs miroirs concaves, sur lesquels la première, la deuxième, la troisième et/ou la quatrième surface de réflexion sont disposées.

10. Procédé destiné à la mesure du débit d'un produit à travers un tube de mesure avec un axe de tube de mesure droit au moyen de signaux acoustiques d'après le principe de la différence des temps de transit, un premier signal acoustique étant réfléchi sur un premier trajet de signal d'un premier émetteur sur au moins une premier surface de réflexion vers un premier récepteur à travers le tube de mesure, de telle sorte que le signal acoustique se propage sur le premier trajet de signal le long d'au moins une première et au moins une deuxième section partielle droite à travers le tube de mesure, la première section partielle droite présentant une première distance par rapport à l'axe de tube de mesure et la deuxième section partielle droite présentant une deuxième distance par rapport à l'axe de tube de mesure, la première distance étant différente de la deuxième distance, et la somme de toutes les longueurs - projetées sur l'axe de tube de mesure de l'ensemble des sections partielles du premier trajet de signal avec la première distance par rapport à l'axe de tube de mesure dans une coupe longitudinale englobant l'axe de tube de mesure (1) - présentant une première valeur prédéfinie, et la somme de toutes les longueurs - projetées sur l'axe de tube de mesure de l'ensemble des sections partielles du premier trajet de signal avec la deuxième distance par rapport à l'axe de tube de mesure dans la coupe longitudinale englobant l'axe de tube de mesure (1) - présentant une deuxième valeur prédéfinie, la première valeur étant différente de la deuxième valeur, et la première et la deuxième valeur étant différentes de zéro, et une normale à la première surface de réflexion présentant un angle par rapport à l'axe de tube de mesure, qui est différent de 90°.

11. Procédé selon la revendication 10,
    **caractérisé**
    **en ce que** respectivement deux sections partielles du premier trajet de signal sont disposées face à face selon une symétrie spéculaire dans le tube de mesure.

12. Procédé selon la revendication 10,
    **caractérisé**
    **en ce qu'**un deuxième signal acoustique est réfléchi sur un deuxième trajet de signal d'un deuxième émetteur à au moins une autre, troisième surface de réflexion, vers un deuxième récepteur à travers le tube de mesure, de telle sorte que le signal acoustique se propage sur le deuxième trajet de signal le long d'au moins une quatrième et d'au moins une cinquième section partielle droite à travers le tube de mesure, la quatrième section partielle droite présentant une quatrième distance par rapport à l'axe de tube de mesure et la cinquième section partielle droite présentant une cinquième distance par rapport à l'axe de tube de mesure, la quatrième distance étant différente de la cinquième distance, et la somme de toutes les longueurs - projetées sur l'axe de tube de mesure de l'ensemble des sections partielles du deuxième trajet de signal avec la quatrième distance par rapport à l'axe de tube de mesure - présentant une quatrième valeur prédéfinie et la somme de toutes les longueurs - projetées sur l'axe de tube de mesure de l'ensemble des sections partielles du deuxième trajet de signal avec la cinquième distance par rapport à l'axe de tube de mesure - présentant une cinquième valeur prédéfinie, la quatrième valeur étant différente de la cinquième valeur, et la quatrième et la cinquième valeur étant différentes de zéro.

13. Procédé selon la revendication 12,
    **caractérisé**
    **en ce que** le premier et le deuxième trajet de signal sont disposés face à face selon une symétrie spéculaire et sont pondérés à égalité lors du calcul du débit.

14. Procédé selon la revendication 12,
    **caractérisé**
    **en ce que** le premier et le deuxième trajet de signal coïncident par une rotation autour de l'axe de tube de mesure.

Fig. 1a

Fig. 1b

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4103551 A
- US 4610167 A
- US 4024760 A
- US 7706986 B
- WO 1995012110 A1

- DE 29719677 U1
- US 6098466 A
- EP 0715155 A1
- DE 19808642 C1
- DE 102007004936 B4

**In der Beschreibung aufgeführte Nicht-Patentliteratur**

- **T. TRESCH ; T. STAUBLI ; P. GRUBER.** Comparsion of integration methods for multipath accoustic discharge measurements. *Begleitschrift zur 6th international Conference on Innovation in Hydraulic Efficiency Measurements,* 30. Juli 2006

- **A. VOSER.** Analyse und Fehleroptimierung der mehrpfadigen akustischen Durchflussmessung in Wasserkraftanlagen. *ETH Zürich Dissertation,* 1999, (13102